# FASCICULE DE BREVET EUROPEEN

(11) **EP 0 646 715 B1**
(45) Date de publication et mention de la délivrance du brevet: **12.08.1998**
(21) Numéro de dépôt: 94402174.0
(22) Date de dépôt: 29.09.1994
(51) Int. Cl.: F02K 1/00, F02K 1/06, F02K 1/12

(54) **Tuyère bidimensionnelle à détente-déflection adaptable à différentes conditions de vol**
An unterschiedliche Flugzustände anpassbare Schubdüse mit zweidimensionaler Schubvektorsteuerung
Bidimensional vectoriable nozzle adaptable to different flight conditions

(30) Priorité: 30.09.1993 FR 9311645
(43) Date de publication de la demande: 05.04.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Beaurain, André, F-60230 Chambly (FR); Bonnard, Julien, F-97310 Kourou (FR); Saucereau, Didier, F-27120 Pacy-sur Eure (FR)
(74) Mandataire: Thévenet, Jean-Bruno

(56) Documents cités:
- EP-A- 0 392 526
- FR-A- 2 316 447
- GB-A- 2 055 333
- US-A- 3 080 711

## Description

### Domaine de l'invention

La présente invention concerne le domaine de la propulsion combinée et plus particulièrement celui des véhicules spatiaux utilisant des tuyères bidimensionnelles à détente-déflexion.

De façon plus spécifique, la présente invention a pour objet une tuyère bidimensionnelle à détente-déflexion adaptable à différentes conditions de vol d'un véhicule aérospatial et comprenant une première paroi profilée principale présentant une première partie sensiblement parallèle à l'axe longitudinal de la tuyère et délimitant une chambre de combustion, une deuxième partie incurvée délimitant un col de tuyère, une troisième partie essentiellement rectiligne et inclinée d'un angle prédéterminé θ par rapport à l'axe de la tuyère et une quatrième partie courbe dont la concavité est inversée par rapport à celle de la deuxième partie, une deuxième paroi profilée principale présentant une première partie sensiblement parallèle à l'axe de la tuyère et délimitant ladite chambre de combustion, une deuxième partie inclinée par rapport à la première partie à laquelle elle est rattachée et délimitant ledit col de tuyère, une troisième partie essentiellement rectiligne et une arête d'extrémité définissant un foyer pour la tuyère, et des première et deuxième parois latérales sensiblement planes reliant les première et deuxième parois profilées principales, la tuyère comprenant en outre des moyens pour modifier sélectivement en vol la position de l'arête d'extrémité constituant le foyer de la tuyère, ainsi que la position du col.

### Art antérieur

On connaît déjà des tuyères propulsives du type à détente-déflexion.

Les tuyères à corps central peuvent avoir une configuration axisymétrique ou présenter un aspect bidimensionnel. Dans tous les cas, de telles tuyères présentent une géométrie fixe pour un mode donné de fonctionnement.

On connaît également des tuyères sans corps central présentant certains éléments de géométrie variable. Pour provoquer une déviation de jet, les tuyères traditionnelles impliquent en général la mise en oeuvre de plusieurs déflecteurs externes ou additionnels, et la structure de base de la tuyère reste elle-même fixe.

On connaît encore par le document FR-A-2 316 447 une tuyère comprenant des moyens pour modifier sélectivement en vol la position d'une arête d'extrémité constituant le foyer de la tuyère, ainsi que le foyer du col.

Le document EP-A-392 526 décrit par ailleurs une tuyère dont le profil inférieur à géométrie variable comprend deux panneaux articulés rigides pour assurer une adaptation à différentes conditions de vol.

### Objet et description succincte de l'invention.

La présente invention vise à améliorer l'adaptation des véhicules spatiaux à différentes conditions de vol en optimisant la poussée axiale aux différentes vitesses de vol tout en élargissant le domaine d'application des tuyères bidimensionnelles à détente-déflexion.

Ces buts sont atteints grâce à une tuyère bidimensionnelle à détente déflexion adaptable à différentes conditions de vol d'un véhicule aérospatial et comprenant une première paroi profilée principale présentant une première partie sensiblement parallèle à l'axe longitudinal de la tuyère et délimitant une chambre de combustion, une deuxième partie incurvée délimitant un col de tuyère, une troisième partie essentiellement rectiligne et inclinée d'un angle prédéterminé θ par rapport à l'axe de la tuyère et une quatrième partie courbe dont la concavité est inversée par rapport à celle de la deuxième partie, une deuxième paroi profilée principale présentant une première partie sensiblement parallèle à l'axe de la tuyère et délimitant ladite chambre de combustion, une deuxième partie inclinée par rapport à la première partie à laquelle elle est rattachée et délimitant ledit col de tuyère, une troisième partie essentiellement rectiligne et une arête d'extrémité définissant un foyer pour la tuyère, et des première et deuxième parois latérales sensiblement planes reliant les première et deuxième parois profilées principales, la tuyère comprenant en outre des moyens pour modifier sélectivement en vol la position de l'arête d'extrémité constituant le foyer de la tuyère, ainsi que la position de l'arête d'extrémité constituant le foyer de la tuyère, ainsi que la position du col, caractérisé en ce que ladite deuxième paroi profilée principale comprend au moins deux panneaux articulés rigides rapportés sur une partie fixe de la structure de la tuyère, et en ce que la tuyère comprend des moyens d'action sur ladite deuxième paroi profilée principale pour modifier sélectivement en vol de façon indépendante la position du col et celle de l'arête d'extrémité constituant le foyer de la tuyère.

Selon un premier mode de réalisation possible, la deuxième paroi profilée principale comprend au moins un premier panneau coulissant sur la partie fixe de la structure de la tuyère et un sccond panneau articulé à l'extrémité aval du premier panneau.

Dans ce cas, selon une variante possible, ledit premier panneau est lui-même subdivisé en des premier et second panneaux élémentaires articulés entre eux, seul le premier panneau élémentaire disposé en amont coulissant sur ladite partie fixe.

Selon un deuxième mode particulier de réalisation, la deuxième paroi profilée principale comprend au moins un premier panneau articulé à son extrémité amont sur la partie fixe de la structure de la tuyère, un deuxième panneau articulé par son extrémité amont sur l'extrémité aval du premier panneau et un troisième panneau monté à l'extrémité aval du deuxième panneau et pouvant coulisser par rapport à ce deuxième panneau.

Selon une caractéristique avantageuse, une tuyère bidimensionnelle conforme à l'invention comprend des cloisons mobiles parallèles auxdites première et deuxième parois latérales et solidaires desdits panneaux articulés rigides.

Les cloisons mobiles peuvent former avec les panneaux articulés rigides des structures en forme de U.

Selon un mode de réalisation possible, les panneaux articulés rigides portent des armatures parallèles auxdites première et deuxième parois latérales et des cloisons de petites dimensions sont rapportées sur lesdites armatures.

Lesdites cloisons mobiles sont montées de façon à pouvoir se chevaucher partiellement.

Selon une configuration de mise en oeuvre avantageuse, une tuyère bidimensionnelle selon l'invention, comprend plusieurs veines parallèles de circulation des gaz de combustion délimitées par lesdites cloisons mobiles parallèles aux première et deuxième parois latérales et solidaires des panneaux articulés rigides.

Selon un mode particulier de réalisation de l'invention, la tuyère bidimensionnelle selon l'invention comprend des actionneurs disposés dans le véhicule aérospatial au-dessus de la tuyère pour commander les mouvements de déplacement des panneaux articulés rigides.

Selon un autre mode particulier de réalisation de l'invention, la tuyère bidimensionnelle comprend des actionneurs disposés dans des espaces libres ménagés entre lesdites cloisons mobiles pour commander les mouvements de déplacement des panneaux articulés rigides.

Dans les deux modes particuliers de réalisation précédents, de façon avantageuse, les actionneurs exercent leur action sur les cloisons mobiles ou les armatures solidaires des panneaux articulés rigides.

Selon encore un autre mode particulier de réalisation de l'invention, la tuyère bidimensionnelle selon l'invention comprend des actionneurs disposés sur une structure fixe solidaire du véhicule aérospatial placée sous lesdits panneaux articulés rigides.

Dans ce cas, de préférence, la tuyère bidimensionnelle comprend des volets disposés sur les panneaux articulés rigides au-dessus des articulations pour assurer une continuité de la deuxième paroi profilée principale.

De façon plus particulièrement avantageuse, lesdits volets sont articulés sur un panneau amont et plaqués sur le panneau aval immédiatement adjacent par la pression de la chambre de combustion et du ressort de rappel de sécurité.

### Brève description des dessins

D'autres caractéristiques et avantages de l'invention ressortiront de la description suivante de modes particuliers de réalisation donnés à titre d'exemples, en référence aux dessins annexés, sur lesquels :
- La figure 1 est une vue schématique en perspective d'une tuyère bidimensionnelle à détente-déflexion à laquelle est applicable la présente invention,
- la figure 2 est une vue schématique, selon un plan médian vertical, d'une tuyère bidimensionnelle à détente-déflexion telle que celle représentée sur la figure 1,
- la figure 3 est une vue schématique en coupe, selon un plan médian vertical, d'une tuyère bidimensionnelle à détente-déflexion à géométrie variable selon un premier mode de réalisation de l'invention, le profil inférieur de la tuyère à deux plaques mobiles étant représenté dans trois positions différentes,
- la figure 4 est une vue schématique en coupe, selon un plan médian vertical, d'une tuyère bidimensionnelle à détente-déflexion à géométrie variable selon un deuxième mode de réalisation de l'invention, le profil inférieur de la tuyère à trois plaques mobiles étant représenté dans trois positions différentes,
- la figure 5 est une vue schématique en élévation d'un exemple de réalisation d'une tuyère bidimensionnelle à détente-déflexion selon la figure 3 munie d'actionneurs disposés dans le véhicule aérospatial au-dessus de la tuyère, les éléments à géométrie variable de la tuyère étant représentés dans trois positions différentes,
- la figure 6 est une section selon la ligne VI-VI de la figure 5 montrant un détail relatif au recouvrement de cloisons mobiles,
- la figure 7 est une vue agrandie en élévation d'un exemple d'articulation entre deux éléments à géométrie variable de la tuyère de la figure 5 se recouvrant partiellement,
- la figure 8 est une section selon la ligne VIII-VIII de la figure 7,
- la figure 9 est une vue en élévation analogue à la figure 5 mais montrant, dans une seule position extrême, un exemple de tuyère bidimensionnelle à détente-déflexion équipée de cloisons mobiles constituées d'un ensemble de petites cloisons limitées en dimension,
- la figure 10 est une vue en coupe selon la ligne X-X de la figure 9,
- la figure 11 est une vue de détail avec agrandissement d'une partie du système de guidage des cloisons mobiles de la figure 10,
- la figure 12 est une vue selon la flèche f1 de la figure 11,
- la figure 13 est une vue selon la flèche F de la figure 14,
- la figure 14 est une vue en élévation analogue à la figure 5, mais montrant, dans deux positions extrêmes, un exemple de tuyère bidimensionnelle à détente-déflexion équipée de cloisons mobiles et munie d'actionneurs disposés au niveau de la tuyère dans des espaces situés entre les veines d'écoulement des gaz,
- la figure 15 est une vue en élévation analogue à la figure 5, mais montrant, dans deux positions extrêmes, un exemple de tuyère bidimensionnelle à détente-déflexion munie d'actionneurs disposés sous les éléments à géométrie variable de la tuyère représentés dans deux positions extrêmes,
- la figure 16 est une vue de détail montrant de façon agrandie un volet intermédiaire interposé entre deux plaques du profil inférieur de la tuyère selon le mode de réalisation de la figure 15, et
- la figure 17 est une vue schématique en élévation d'une variante de tuyère bidimensionnelle à détente déflexion selon la figure 4, dans laquelle les actionneurs de commande des éléments à géométrie variable, représentés dans deux positions extrêmes, sont disposés au niveau de la tuyère dans des espaces situés entre les veines d'écoulement des gaz, et
- la figure 18 est une vue schématique en élévation d'une variante de tuyère bidimensionnelle à détente-déflexion selon la figure 4, dans laquelle les actionneurs de commande des éléments à géométrie variable, représentés dans deux positions extrêmes, sont disposés dans le véhicule aérospatial au-dessus de la tuyère.

### Description détaillée de modes particuliers de réalisation

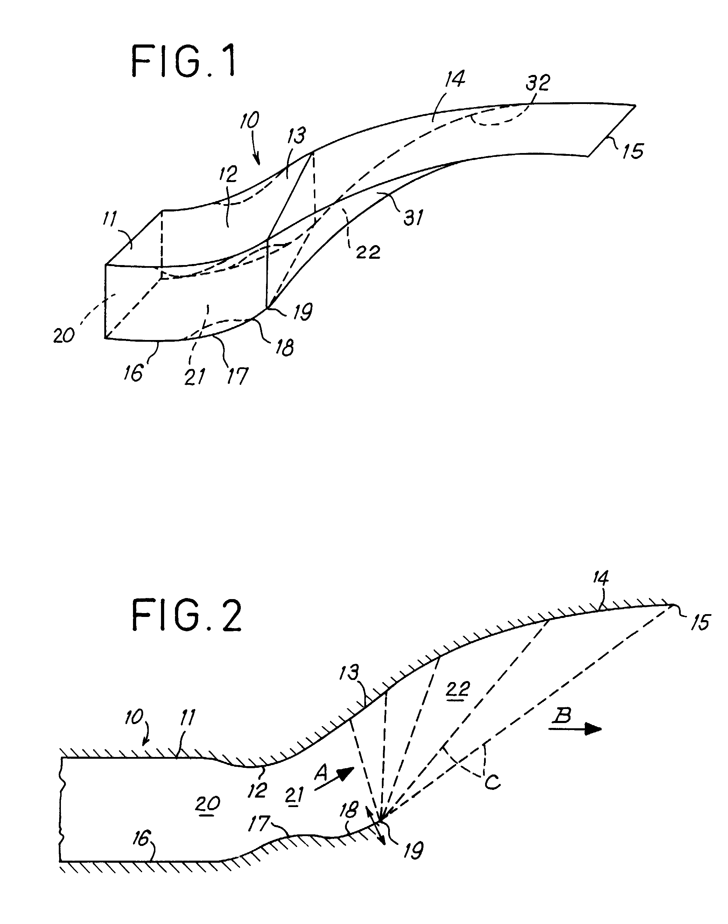

Les figures 1 et 2 montrent le principe d'une tuyère bidimensionnelle 10 à détente-déflexion pouvant être mise en oeuvre dans le cadre de la présente invention. La tuyère 10 présente une section essentiellement rectangulaire dans un plan perpendiculaire à son axe longitudinal.

La tuyère 10 comprend une première paroi principale profilée qui sur les figures 1 et 2 constitue un profil supérieur et présente une première partie 11 qui est sensiblement plane et parallèle à l'axe longitudinal du véhicule et délimite une chambre de combustion 20. La première paroi principale présente une deuxième partie incurvée 12 délimitant un col de tuyère 21, une troisième partie 13 essentiellement rectiligne qui est inclinée d'un angle prédéterminé θ par rapport à l'axe du véhicule et une quatrième partie courbe dont la concavité est tournée vers l'intérieur de la tuyère et est inversée par rapport à celle de la deuxième partie 12 délimitant le col 21.

Une deuxième paroi principale profilée, qui sur les figures 1 et 2 constitue un profil inférieur, présente une première partie 16 sensiblement plane et parallèle à l'axe du véhicule qui délimite la chambre de combustion 20, une deuxième partie 17 délimitant le col de tuyère 21, qui peut être incurvée et convexe ou à la limite plane mais inclinée par rapport à la première partie 16, une troisième partie 18 essentiellement rectiligne et une arête d'extrémité 19 qui constitue le foyer de la tuyère. Des plaques latérales 31, 32, non visibles sur la figure 2, relient entre elles les première et deuxième parois principales profilées pour constituer un canal d'écoulement des gaz brûlés dans la chambre de combustion 20.

A l'arrière du col 21 délimité par les parties incurvées 12 et 17, c'est-à-dire en aval de ce col, l'écoulement des gaz est d'abord orienté selon le sens de la flèche A essentiellement parallèlement à la partie rectiligne 13 du profil supérieur, puis à l'arrière du foyer 19, c'est-à-dire en aval de celui-ci, les gaz présentent un faisceau de détente 22 pour produire vers l'extrémité 15 du profil supérieur un écoulement de gaz détendus orienté essentiellement selon la flèche B, c'est-à-dire pratiquement parallèlement à l'axe du moteur.

Dans une tuyère à détente-déflexion, l'écoulement d'un flux supersonique autour d'un dièdre dont le sommet est constitué par le foyer 19 est caractérisé par deux zones d'écoulement uniforme selon les flèches A et B respectivement à l'avant et à l'arrière d'une zone de détente constituée par un ensemble de lignes caractéristiques C de l'écoulement se focalisant sur le sommet du dièdre (foyer 19). Dans le cas d'une tuyère, dans la mesure où l'on désire obtenir en sortie un écoulement B essentiellement parallèle à l'axe du véhicule, l'écoulement A devant subir la détente dans la zone des lignes C rentre entre les tronçons de paroi 13 et 18 inclinés qui prolongent le col avec un angle θ tel que lorsque la tuyère est adaptée, c'est-à-dire lorsque l'air ambiant est à la pression d'adaptation Pad, l'écoulement en sortie de la tuyère est dans l'axe du moteur et la poussée est également dans l'axe du véhicule.

Lorsque la pression extérieure n'est pas égale à la pression de détente pour laquelle la tuyère a été dimensionnée par construction (choix du profil supérieur 11 à 14 et du foyer 19), l'écoulement en sortie de la tuyère n'est plus dans l'axe du véhicule. Il y a alors apparition d'une composante verticale de la poussée.

Conformément à la présente invention, des moyens sont prévus pour modifier sélectivement en vol la position de l'arête d'extrémité de la paroi profilée principale inférieure qui définit le foyer 19 de la tuyère. Ces moyens de modification de la position du foyer 19 et de la dimension du col 21 de la tuyère comprennent essentiellement un ensemble d'éléments articulés qui constituent directement la paroi profilée principale inférieure. La tuyère 10 présente ainsi selon l'invention un profil inférieur à géométrie variable par rapport au corps du véhicule aérospatial équipé d'une telle tuyère, et c'est ce profil inférieur à géométrie variable qui permet d'adapter la tuyère à différentes conditions de vol.

On sait que pour des véhicules aérospatiaux présentant une trajectoire allant du sol jusqu'à une orbite à haute altitude, par exemple pour des véhicules à propulsion combinée, la vitesse du véhicule évolue au cours du vol. Or la géométrie de la tuyère bidimensionnelle à détente-déflexion, et notamment la dimension du col 21, et la position de l'arête 19 constituant le foyer ne sont adaptées pour conférer à la tuyère une poussée axiale optimisée que pour une altitude et une vitesse de vol bien déterminées.

Avec une tuyère à détente-déflexion conforme à l'invention, la géométrie de la tuyère peut être parfaitement adaptée aux différentes conditions de vol dans une plage très étendue, grâce à une modification sélective du profil inférieur de la tuyère, et les effets parasites sont réduits au minimum.

Dans la suite de la description, on considérera à titre d'exemple trois positions différentes possibles pour divers modes de réalisation de l'invention, à savoir une première position correspondant à un premier régime de vol à vitesse supersonique modérée (par exemple pour un nombre de Mach de vol de 2,89), une deuxième position correspondant à un deuxième régime de vol à vitesse supersonique intermédiaire (par exemple pour un nombre de Mach de vol de 4,62) et une troisième position correspondant à un troisième régime de vol à vitesse supersonique élevée (par exemple un nombre de Mach de vol de 5,82). L'invention permet d'obtenir une adaptation de la tuyère dans toute la plage comprise entre les première et dernière positions.

Sur les dessins et dans la suite de la description, on affectera aux différents éléments déplaçables contribuant à faire varier la géométrie du profil inférieur de la tuyère des lettres a, b ou c selon que ces éléments seront placés dans les première, deuxième ou troisième positions correspondant à des premier, deuxième ou troisième régimes de vol.

Par ailleurs, on désignera le cas échéant par avant et arrière des extrémités d'éléments ou des positions situées respectivement en amont et en aval selon le sens d'écoulement des gaz issus de la chambre de combustion.

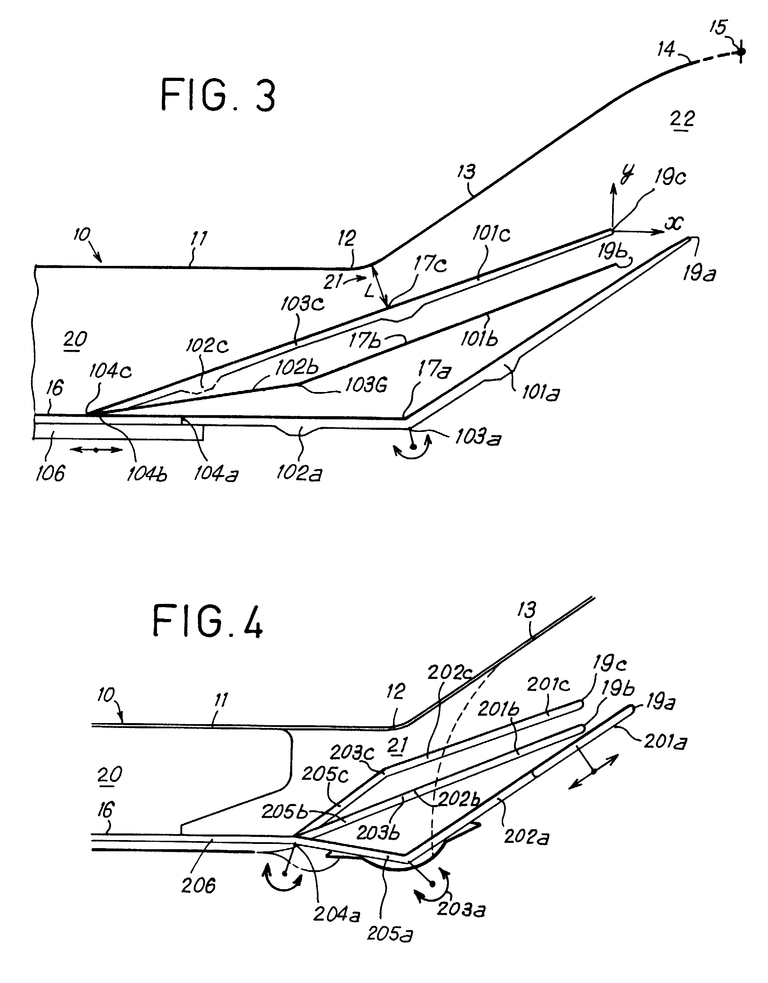

On se reportera maintenant aux vues schématiques des figures 3 et 4, sur lesquelles on voit que, selon la présente invention, le profil inférieur à géométrie variable comprend au moins deux panneaux articulés rigides rapportés sur une partie fixe de la structure de la tuyère.

La figure 3 montre une première famille de réalisations possibles, selon laquelle un premier panneau 102 est monté coulissant à sa partie avant 104 (c'est-à-dire en amont du col 21 dans le sens d'écoulement des gaz depuis la chambre de combustion) sur une partie fixe 106 de la structure de la tuyère. Un second panneau 101 est articulé par son extrémité avant à l'aide d'une articulation 103 sur l'extrémité arrière (aval) du premier panneau 102. L'extrémité arrière (aval) du second panneau 101 définit le foyer 19.

Comme on peut le voir sur la figure 3, dans la troisième position référencée c correspondant à la vitesse la plus élevée, les premier et deuxième panneaux 102c, 101c sont sensiblement alignés, le col 21 présente la dimension L la plus réduite entre la portion 12 de paroi supérieure fixe et la partie 17c du deuxième panneau mobile 101c, et le foyer 19c est dans une position extrême en hauteur.

Dans la position intermédiaire référencée b correspondant à une vitesse plus faible que dans la position référencée c, le deuxième panneau 101b est sensiblement parallèle au même panneau placé dans la position 101c, mais contribue à définir par sa partie 17b un col 21 de plus grande dimension. Le premier panneau 102b articulé en 103b sur le panneau 101b n'est plus aligné avec ce dernier et forme un angle obtus avec celui-ci.

Dans la position référencée a correspondant à la vitesse la plus faible (par exemple une vitesse supersonique avec un nombre de Mach compris entre 1 et 3), le premier panneau 102a est dans une position sensiblement parallèle à la partie fixe 106 définissant la paroi inférieure 16 de la chambre de combustion, et ce panneau 102a est dans une position rétractée extrême vers l'aval; l'extrémité avant 104a de ce panneau étant décalée vers l'aval par rapport aux positions 104b, 104c. Le panneau aval 101a forme un angle obtus avec le panneau 102a et présente une extrémité libre définissant la position du foyer 19a la plus en aval. Dans la configuration de la position référencée a, le col 21 présente également la dimension la plus importante.

On a représenté sur la figure 3 des positions légèrement différentes 19a, 19b, 19c pour le foyer quand la section au niveau du col 21 varie. En réalité, grâce à la présente invention et à la présence de deux panneaux articulés 101, 102 mobiles en rotation et translation, malgré de grandes variations de la section du col, la position du foyer peut être maintenue fixe ou dans une plage de variations très limitée. Inversement, la position du foyer pourrait être modifiée de façon sensible sans que la section du col soit elle-même modifiée de façon significative. La combinaison d'au moins deux panneaux articulés rigides, mobiles en rotation et translation, permet ainsi d'agir sur la position du foyer et sur la section du col de façon indépendante et précise, ce qui ne serait pas le cas si un seul panneau articulé était mis en oeuvre.

La figure 4 montre une autre famille de réalisations possibles, selon laquelle un premier panneau 205 est articulé par sa partie avant par une articulation 204 sur une plaque fixe 206 de la structure de la tuyère contribuant à former la paroi inférieure 16 de la chambre de combustion 20, un deuxième panneau 202 est articulé par sa partie avant, à l'aide d'une articulation 203, sur la partie arrière du panneau 205. Un panneau mobile supplémentaire 201 est en outre monté à l'extrémité arrière du panneau 202 et peut coulisser par rapport à ce dernier, parallèlement à celui-ci. Comme le montre la figure 4, dans la troisième position référencée c, les panneaux 205c et 202c forment une ligne brisée avec la plaque fixe 206 et le panneau 201c est rétracté par coulissement vers l'amont le long du panneau 22. Cette position référencée c définit, comme dans le cas de la figure 3, un col de dimension réduite et une position du foyer 19c la plus proche de la paroi supérieure 13.

La position intermédiaire référencée b montre des panneaux 205b, 202b et 201 b à peu près alignés mais formant un angle obtus par rapport à la plaque fixe 206. Comme dans la position b de la figure 3, le col 21 présente une dimension plus grande que dans la position c et les panneaux arrière 202b, 201b définissent un foyer 19b un peu plus bas que dans la position c.

Dans la position a correspondant à une vitesse supersonique la plus faible, par exemple avec un nombre de Mach compris entre 1 et 3, le panneau arrière 201a est dans une position la plus reculée vers l'aval par coulissement le long du panneau 202a, pour définir un foyer 19a en position aval extrême. Le panneau 205a forme avec la plaque fixe 206 et le panneau 202a une ligne brisée, le panneau 205a étant légèrement incliné vers le bas par rapport à la plaque 206. La position a correspond au col de plus grande section.

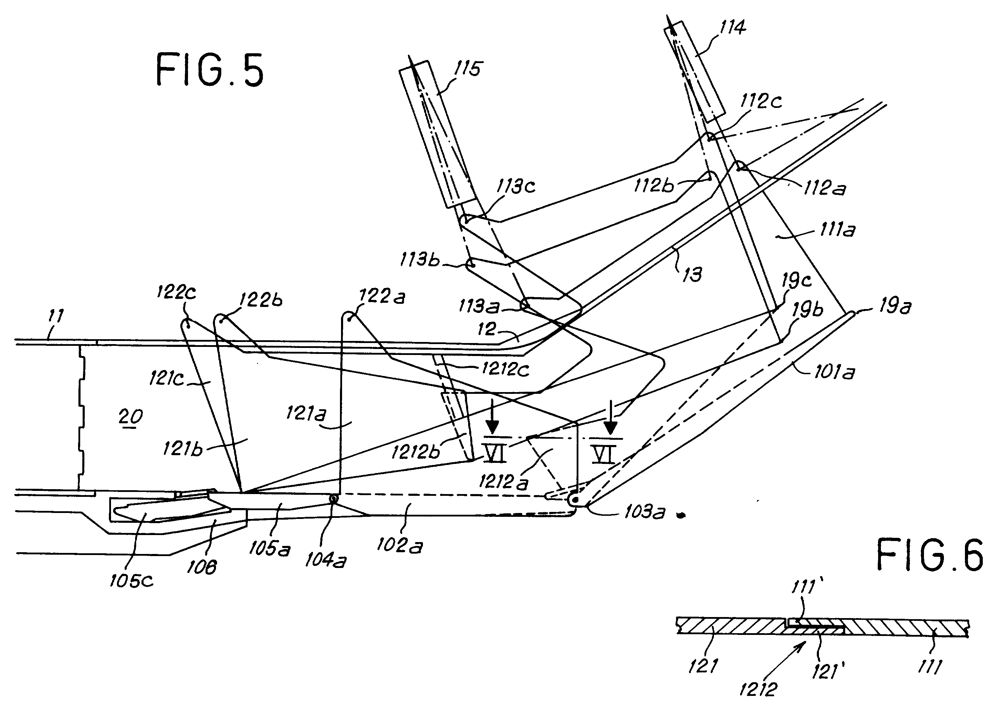

Les figures 5 à 8 représentent un exemple particulier de réalisation d'une tuyère bidimensionnelle selon l'invention appartenant à la famille de réalisations illustrées sur la figure 3.

Comme on peut le voir sur la figure 5, le premier panneau 102 peut être prolongé vers l'amont par un second panneau élémentaire 105 qui seul coulisse sur la plaque fixe 106. L'extrémité amont 104 du premier panneau élémentaire 102 correspondant alors à une articulation entre les deux panneaux élémentaires 102, 105. Le panneau aval 101 est articulé sur la partie arrière du panneau élémentaire 102 comme dans le cas de la figure 2.

Les panneaux 101 et 102 sont prolongés vers le haut par des cloisons latérales 111 et 121 respectivement, qui sont parallèles aux parois latérales 31, 32 de la tuyère 10 (figure 1). Les cloisons mobiles 111, 121 se chevauchent dans une zone de recouvrement 1212 au voisinage de l'articulation 103, chaque cloison 111,121 comprenant une extrémité 111', 121' d'épaisseur réduite dans cette zone de recouvrement 1212 dont la surface est variable selon la position des panneaux 101, 102 et des cloisons 111, 121 (les zones 1212, 1212b, 1212c présentant des surfaces de recouvrement de plus en plus réduites).

Les cloisons 111 et 121 présentent à leur partie supérieure des excroissances 112, 113, 122 sur lesquelles agissent des vérins disposés dans la structure du véhicule aérospatial au-dessus de la tuyère 10. Sur la figure 5, on n'a toutefois représenté que les deux vérins 114, 115 agissant sur les excroissances 112, 113 de la cloison 111 solidaire du panneau 101.

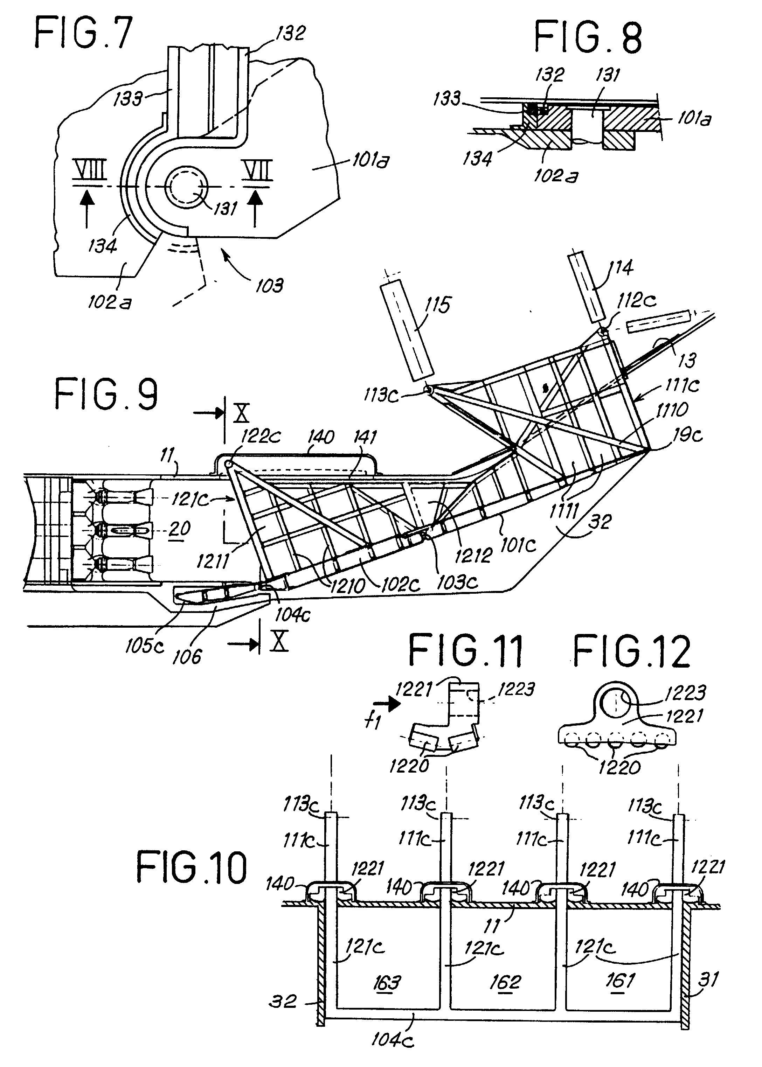

La cloison 121 et les panneaux 102, 105 peuvent eux-mêmes être déplacés par l'action d'un vérin agissant par exemple sur l'excroissance 122. Toutefois, comme cela sera explicité plus loin en référence aux figures 9 à 12, l'excroissance 122 peut simplement être guidée le long de la paroi supérieure 11 de la tuyère, la cloison mobile 121 et les panneaux 102, 105 étant amenés à coulisser lors de l'action des vérins 114, 115 sur la cloison 111, par l'action exercée au niveau de l'articulation 103.

Les figures 7 et 8 montrent de façon plus détaillée un exemple d'articulation 103 entre les panneaux 101 et 102 qui peuvent pivoter autour d'un axe 131 parallèle aux plans des panneaux 101, 102. Des joints 132, 133 placés le long du rebord de chacun des volets 111, 121 et des panneaux 101, 102 et maintenus au niveau de l'articulation 103 par une collerette 134, assurent l'étanchéité entre les panneaux 101 et 102 et les cloisons 111, 121 vis-à-vis de l'extérieur. Les cloisons 111 et 121 peuvent ainsi jouer au moins partiellement le rôle des parois latérales 31, 32 de la tuyère 10, une paire de cloisons 111, 121 étant disposée à chaque extrémité latérale des panneaux 101, 102 de manière à former avec les panneaux 101, 102 une structure en forme de benne à section en U.

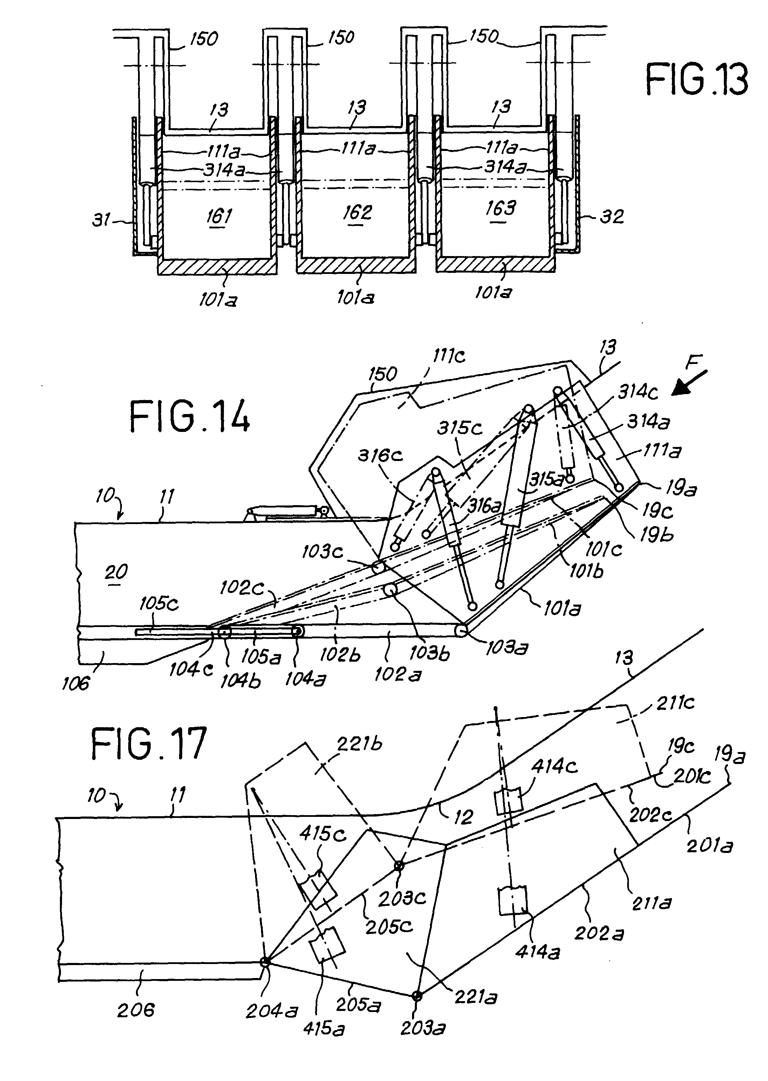

Les figures 9 et 10 correspondent à une variante de réalisation de la tuyère de la figure 5. Dans le cas de la réalisation de la figure 9, des armatures en treillis 1110, 1210 sont rapportées aux extrémités latérales des panneaux 101, 102 et des cloisons limitées en dimensions 1111, 1211 sont fixées sur les armatures en treillis 1110, 1210 de la réalisation de la figure 5, avec des formes géométriques qui peuvent être semblables, notamment grâce à des excroissances 112, 113 des armatures sur lesquelles peuvent agir des vérins 114, 115 placés dans le véhicule aérospatial, ou une excroissance 122 pouvant être guidée sur la paroi supérieure 11 de la tuyère. L'association d'une structure en treillis et de cloisons limitées en dimensions permet d'obtenir des parois latérales mobiles solidaires des panneaux 101, 102 qui, comme dans le cas de la figure 5, peuvent se chevaucher et être étanches de l'extérieur, mais présentent une meilleure tenue vis-à-vis des contraintes mécaniques et thermiques auxquelles elles sont soumises.

La figure 10 montre qu'il est possible, avec une structure de tuyère conforme à l'invention présentant un profil inférieur à géométrie variable, de disposer sur un même ensemble de panneaux 101, 102 entre des parois latérales d'extrémités 31, 32 plusieurs cloisons latérales parallèles 111, 121 qui définissent entre elles plusieurs veines 161, 162, 163 de circulation de gaz chauds issus de la chambre de combustion 20.

Les figures 11 et 12 montrent un exemple de moyens de guidage d'une extrémité supérieure 122 d'une structure en treillis ou d'une cloison 121 solidaire du panneau avant 102, sur la paroi supérieure plane 11 de la tuyère située en amont de la partie incurvée 12 contribuant à définir le col de tuyère.

Une pièce de guidage 1221 comporte un alésage 1223 dans lequel peut tourillonner un axe porté par l'extrémité 122 de l'armature 1210 de la cloison 121, cet axe étant perpendiculaire au plan de la cloison 121. La pièce de guidage 1221 porte à sa partie inférieure des rouleaux ou galets 1220 qui sont prévus pour rouler sur une piste 141 formée sur la face externe de la paroi supérieure 11 de la tuyère. Un capot 140 protège les organes de guidage linéaire et les roulements.

On décrira maintenant en référence aux figures 13 et 14 un autre mode particulier de réalisation possible d'une tuyère selon l'invention appartenant à la famille de réalisations de la figure 3.

Dans le mode de réalisation des figures 13 et 14, qui définit plusieurs veines 161, 162, 163 de passage de gaz de combustion, les vérins 314, 315 et 316 agissant sur des cloisons 111 formant avec le panneau arrière 101 une structure à section en U, ne sont plus disposés dans la structure du véhicule aérospatial, comme dans le cas des figures 5 et 9, mais dans des espaces libres ménagés entre deux cloisons latérales adjacentes 111 de deux veines voisines 161, 162, 163 ou entre une cloison latérale 111 d'extrémité et une paroi latérale fixe 31, 32 de la tuyère 10.

L'installation de vérins dans des espaces inter-veines plutôt que dans l'avion limite l'encombrement en hauteur et facilite la mise en place des vérins notamment pour suivre l'orientation des charges dans les différentes positions de travail. Cette disposition contribue cependant à accroître un peu la dimension transversale du moteur.

Dans la réalisation particulière des figures 13 et 14, on a représenté trois vérins 314, 315, 316 coopérant avec les cloisons latérales 111 au voisinage du panneau arrière 101 qui lors de ses déplacements entraîne par l'articulation 103 le panneau avant 102 dont l'extrémité avant 104 reliée à un deuxième panneau élémentaire 105 peut coulisser sur la plaque fixe 106. Les cloisons latérales 111 peuvent pénétrer plus ou moins profondément selon leur position, à l'intérieur d'un capot de protection et d'étanchéité 150 placé dans l'avion à la partie inférieure de celui-ci.

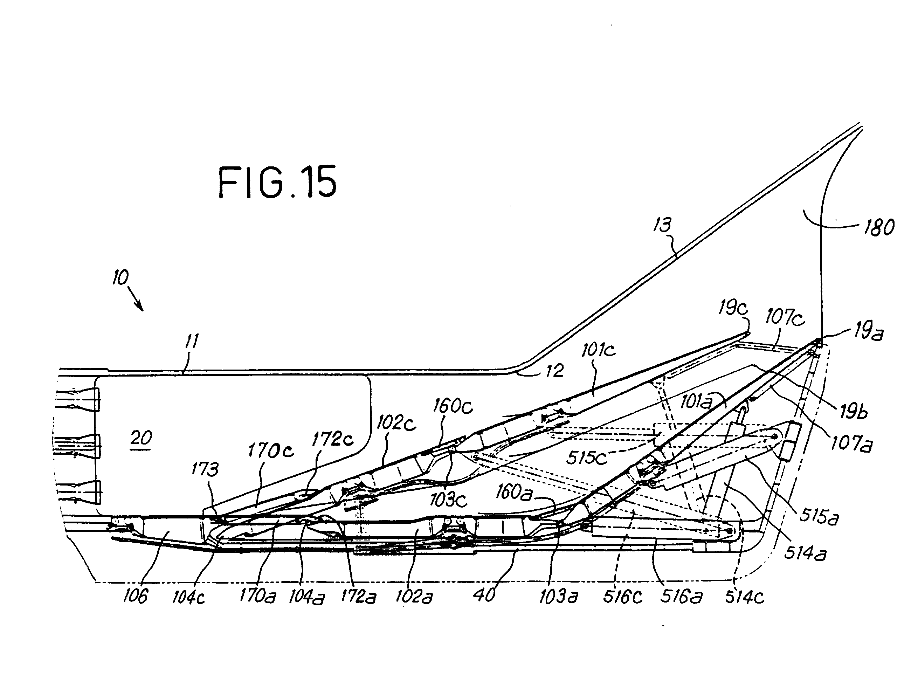

La figure 15 concerne encore un autre mode de réalisation correspondant au schéma de la figure 3, mais dans lequel les vérins de commande 514, 515, 516 sont placés sous les panneaux mobiles 101, 102 définissant le profil de tuyère inférieur à géométrie variable. Dans ce cas, les vérins 514 à 516 prennent appui sur une structure fixe 40 de reprise d'effort solidaire du véhicule aérospatial et rapportée sous les panneaux mobiles 101, 102. Les vérins 514 à 516 assurent la commande du panneau arrière 101, lequel déplace le panneau avant 102 grâce à l'articulation 103. Comme dans le mode de réalisation de la figure 13, plusieurs ensembles de vérins 514 à 516 peuvent être placés sous plusieurs panneaux 101, 102 disposés de façon adjacente sous plusieurs veines parallèles de circulation des gaz de combustion. Dans le cas du mode de réalisation de la figure 15, il suffit cependant de disposer des cloisons fixes 180 entre les différentes veines et l'encombrement en largeur de l'ensemble des différentes veines de la tuyère peut être limité du fait que les vérins sont placés sous les panneaux mobiles 101, 102 du profil inférieur à géométrie variable. D'une manière générale, la disposition des vérins 514 à 516 sous les panneaux 101, 102 contribue à réduire l'encombrement.

Comme dans les modes de réalisation précédents, le panneau mobile arrière 101 contribue à définir la section du col de la tuyère et la position du foyer. Le panneau mobile avant 102, libre en rotation sur le panneau arrière 101 est guidé en translation-rotation à l'amont du col au niveau de l'extrémité 104.

Des petits volets intermédiaires 160, 170 assurent une continuité de la veine au niveau de l'articulation principale 103 entre les panneaux 101, 102 et de la liaison entre l'extrémité 104 du panneau avant 102 et la plaque fixe 106, l'extrémité 104 comprenant une articulation montée sur une glissière de guidage linéaire.

Par ailleurs, à l'arrière du panneau mobile 101, un volet de fermeture 107 comporte une extrémité raccordée à la structure fixe 40 et une deuxième extrémité montée sur une glissière solidaire du panneau 101, un vérin 514 assurant le déplacement du volet de fermeture 107 dans les positions où le foyer est le plus en amont (position c). Le volet de fermeture 107 contribue à isoler le compartiment comprenant le système de commande par vérins.

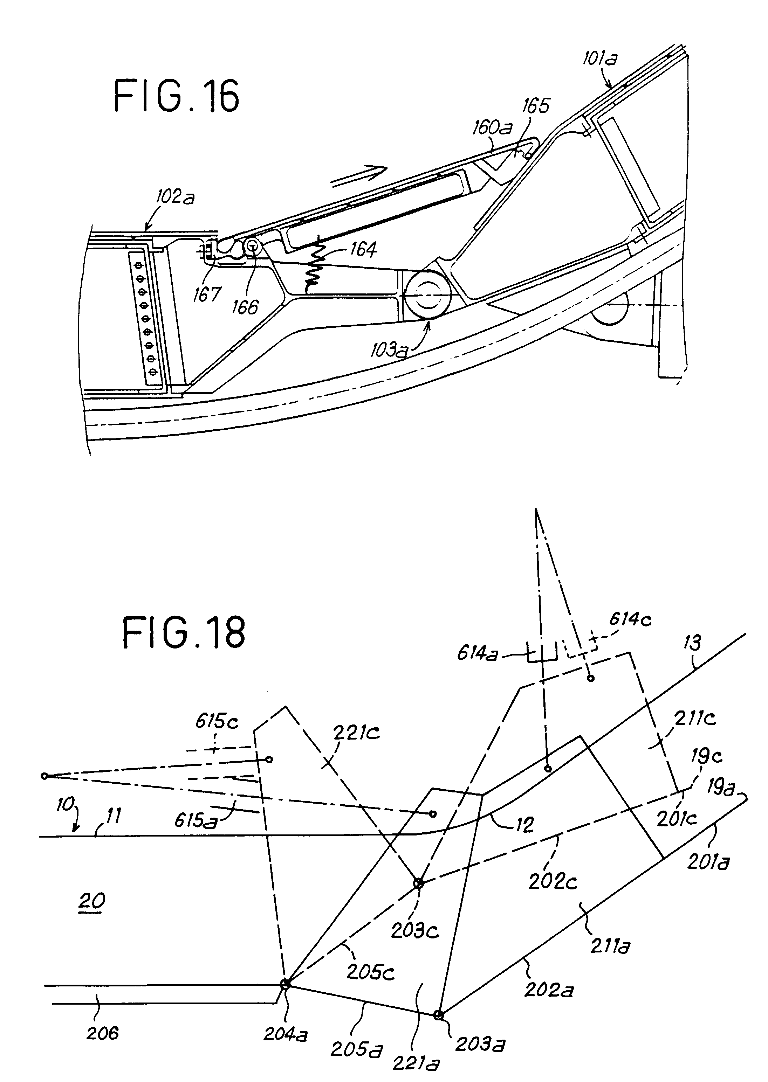

La figure 16 montre de façon plus détaillée un exemple de volet intermédiaire 160 interposé entre le panneau avant 102 et la panneau arrière 101 au niveau de l'articulation 103. Le volet 160 est articulé à sa partie amont autour d'un axe 166 sur la partie arrière du panneau avant 102 et se trouve plaqué par son extrémité aval sur la partie avant du panneau arrière 101 par la pression des gaz circulant depuis la chambre de combustion 20 au-dessus des panneaux 101, 102. Un ressort de rappel 164 reliant le volet 160 au panneau 102 contribue à mieux plaquer le volet 160 contre le panneau 101 et évite d'éventuelles vibrations.

Le volet 160 est muni d'un patin de frottement 167 en matériau composite à proximité de sa propre articulation 166. Ce patin 167 peut être divisé en multiples petits tronçons et peut posséder des ressorts de placage pour assurer l'appui constant sur la panneau avant 102. A l'extrémité aval du volet 160, un patin de frottement 165 en matériau composite de type labyrinthe est fixé sur le volet 160 et glisse sur le panneau mobile 101.

Dans la position a représentée sur la figure 16, qui correspond à la vitesse la plus faible et le col de tuyère de plus grande section, le volet intermédiaire 160 est incliné vers le haut d'environ 10 à 20° par rapport à l'horizontale, ce qui permet à la pression du flux de gaz circulant au-dessus des panneaux 102, 101 d'assurer le placage du volet 160 sur le panneau 101. Le volet 160 garde sensiblement la même inclinaison par rapport à l'horizontale dans les autres positions.

Le volet 170 peut être réalisé sensiblement de la même façon que le volet 160, avec une articulation 173 à son extrémité amont et un patin de frottement 172 à son extrémité aval.

Les figures 17 et 18 montrent des variantes de réalisation d'une tuyère bidimensionnelle appartenant à la famille de la figure 4, c'est-à-dire comprenant un profil inférieur variable composé de deux panneaux articulés principaux 205, 202 disposés en amont et d'un panneau coulissant supplémentaire 201 disposé en aval.

La figure 17 montre un mode particulier de réalisation dans lequel, comme dans le cas du mode de réalisation des figures 13 et 14, des vérins 414, 415 de commande du déplacement des panneaux 205, 202 sont placés dans des espaces libres situés entre des veines de circulation des gaz de combustion. Des cloisons latérales 211, 221 sont rapportées sur les panneaux 202, 205 respectivement pour définir avec ceux-ci une section en U. Le vérin 414 assure la commande du panneau arrière 202 tandis que le vérin 415 assure la commande du panneau avant 205, qui est articulé à l'avant par l'articulation 204 sur une plaque fixe 206 et à l'arrière par l'articulation 203 sur la panneau arrière 202. Le volet arrière 201 coulisse lui même par rapport au panneau 202 pour adapter la position du foyer 19.

Le mode de réalisation de la figure 18 est assez semblable à celui de la figure 17, mais dans ce cas les vérins de commande 614, 615 agissant sur les panneaux 202, 205 sont disposés dans la structure du véhicule aérospatial, au-dessus de la paroi supérieure 11, 12, 13 de la tuyère 10. Comme dans le mode de réalisation de la figure 17, il existe deux structures à section en U avant et arrière formées d'une part par des cloisons 221 et le panneau avant 205 et d'autre part par des cloisons 211et le panneau arrière 202, et ces deux structures à section en U sont commandées de façon indépendante par des vérins 614, 615 pour modifier la section du col de tuyère et la position du foyer 19.

## Revendications

1. Tuyère bidimensionnelle à détente-déflexion (10) adaptable à différentes conditions de vol d'un véhicule aérospatial et comprenant une première paroi profilée principale présentant une première partie (11) sensiblement parallèle à l'axe longitudinal de la tuyère et délimitant une chambre de combustion (20), une deuxième partie incurvée (12) délimitant un col de tuyère (21), une troisième partie (13) essentiellement rectiligne et inclinée d'un angle prédéterminé θ par rapport à l'axe de la tuyère et une quatrième partie courbe (14) dont la concavité est inversée par rapport à celle de la deuxième partie (12), une deuxième paroi profilée principale présentant une première partie (16; 106, 206) sensiblement parallèle à l'axe de la tuyère et délimitant ladite chambre de combustion (20), une deuxième partie (17) inclinée par rapport à la première partie à laquelle elle est rattachée et délimitant ledit col de tuyère (21), une troisième partie (18) essentiellement rectiligne et une arête d'extrémité (19) définissant un foyer pour la tuyère, et des première et deuxième parois latérales (31, 32) sensiblement planes reliant les première et deuxième parois profilées principales, la tuyère comprenant en outre des moyens pour modifier sélectivement en vol la position de l'arête d'extrémité constituant le foyer (19) de la tuyère, ainsi que la position du col (21), caractérisée en ce que ladite deuxième paroi profilée principale comprend au moins deux panneaux articulés rigides (101, 102; 201, 202, 205) rapportés sur une partie fixe (106; 206) de la structure de la tuyère et en ce que la tuyère comprend des moyens d'action sur ladite deuxième paroi profilée principale pour modifier sélectivement en vol de façon indépendante la position du col (21) et celle de l'arête d'extrémité constituant le foyer (19) de la tuyère.

2. Tuyère bidimensionnelle selon la revendication 1, caractérisée en ce que ladite deuxième paroi profilée principale comprend au moins un premier panneau (102) coulissant sur la partie fixe (106) de la structure de la tuyère et un second panneau (101) articulé à l'extrémité aval du premier panneau (102).

3. Tuyère bidimensionnelle selon la revendication 2, caractérisée en ce que ledit premier panneau est lui-même subdivisé en des premier et second panneaux élémentaires (105, 102) articulés entre eux, seul le premier panneau élémentaire (105) disposé en amont coulissant sur ladite partie fixe (106).

4. Tuyère bidimensionnelle selon la revendication 1, caractérisée en ce que ladite deuxième paroi profilée principale comprend au moins un premier panneau (205) articulé à son extrémité amont sur la partie fixe (106) de la structure de la tuyère, un deuxième panneau (202) articulé par son extrémité amont sur l'extrémité aval du premier panneau (205) et un troisième panneau (201) monté à l'extrémité aval du deuxième panneau (202) et pouvant coulisser par rapport à ce deuxième panneau (202).

5. Tuyère bidimensionnelle selon l'une quelconque des revendications 1 à 4, caractérisée en ce qu'elle comprend des cloisons mobiles (111,121; 211, 221) parallèles auxdites première et deuxième parois latérales (31, 32) et solidaires desdits panneaux articulés rigides (101, 102 ; 201, 202, 205).

6. Tuyère bidimensionnelle selon la revendication 5, caractérisée en ce que les cloisons mobiles (111, 121; 211, 221) forment avec les panneaux articulés rigides (101, 102 ; 201, 202, 205) des structures en forme de U.

7. Tuyère bidimensionnelle selon la revendication 5 ou la revendication 6, caractérisée en ce que les panneaux articulés rigides (101, 102 ; 201, 202, 205) portent des armatures (1110, 1210) parallèles auxdites première et deuxième parois latérales (31, 32) et en ce que des cloisons de petites dimensions (1111, 1211) sont rapportées sur lesdites armatures (1110, 1210).

8. Tuyère bidimensionnelle selon l'une quelconque des revendications 5 à 7, caractérisée en ce que lesdites cloisons mobiles (111, 121,; 211, 221) sont montées de façon à pouvoir se chevaucher partiellement.

9. Tuyère bidimensionnelle selon l'une quelconque des revendications 5 à 8, caractérisée en ce qu'elle comprend plusieurs veines parallèles (161, 162, 163) de circulation des gaz de combustion délimitées par lesdites cloisons mobiles (111, 121 ; 211, 221) parallèles aux première et deuxième parois latérales (31, 32) et solidaires des panneaux articulés rigides (101, 102 ; 201, 202, 205).

10. Tuyère bidimensionnelle selon l'une quelconque des revendications 1 à 9, caractérisée en ce qu'elle comprend des actionneurs (114, 115; 614, 615) disposés dans le véhicule aérospatial au-dessus de la tuyère pour commander les mouvements de déplacement des panneaux articulés rigides (101, 102 ; 201, 202,205).

11. Tuyère bidimensionnelle selon l'une quelconque des revendications 5 à 9, caractérisée en ce qu'elle comprend des actionneurs (314,315, 316;414, 415) disposés dans des espaces libres ménagés entre lesdites cloisons mobiles (111; 211, 221) pour commander les mouvements de déplacement des panneaux articulés rigides (101, 102 ; 201, 202, 205).

12. Tuyère bidimensionnelle selon l'une quelconque des revendications 5 à 9 et la revendication 10 ou la revendication 11, caractérisée en ce que les actionneurs (114, 115; 414, 415 ; 614, 615) exercent leur action sur les cloisons mobiles (111, 121; 211, 221) ou les armatures (1110, 1210) solidaires des panneaux articulés rigides (101, 102; 201, 202, 205).

13. Tuyère bidimensionnelle selon l'une quelconque des revendications 1 à 9, caractérisée en ce qu'elle comprend des actionneurs (514, 515, 516) disposés sur une structure fixe (40) solidaire du véhicule aérospatial placée sous lesdits panneaux articulés rigides (101, 102 ; 201, 202, 205).

14. Tuyère bidimensionnelle selon la revendication 13, caractérisée en ce qu'elle comprend des volets (160, 170) disposés sur les panneaux articulés rigides (101, 102; 201, 202, 205) au-dessus des articulations (103, 104 ; 203, 204) pour assurer une continuité de ladite deuxième paroi profilée principale.

15. Tuyère bidimensionnelle selon la revendication 14, caractérisée en ce que lesdits volets (160;170) sont articulés sur un panneau amont (102; 106) et plaqués sur le panneau aval immédiatement adjacent (101; 102) par la pression de la chambre de combustion (20) et du ressort de rappel de sécurité (164).

16. Tuyère bidimensionnelle selon l'une quelconque des revendications 10 à 15, caractérisée en ce que les actionneurs (114, 115; 314, 315, 316 ; 414,415; 514, 515, 516 ; 614, 615) sont constitués par des vérins hydrauliques.

17. Tuyère bidimensionnelle selon la revendication 7, caractérisée en ce qu'elle comprend des moyens (122) de guidage desdites armatures (1110, 1210) sur ladite première paroi profilée principale (11 à 14).

## Patentansprüche

1. Zweidimensionale Entspannungs-Ablenkungs-Düse (10), die an unterschiedliche Flugbedingungen eines Raumfahrzeugs anpassbar ist und eine erste profilierte Hauptwand aufweist, die einen ersten Abschnitt (11) darbietet, der im wesentlichen parallel zur Längsachse der Düse verläuft und eine Brennkammer (20) abgrenzt, einen zweiten, einwärts gekrümmten Abschnitt (12), der einen Düsenhals (21) begrenzt, einen dritten, im wesentlichen geradlinigen und mit einem vorbestimmten Winkel Θ in Bezug auf die Achse der Düse geneigten Abschnitt (13) und einen vierten, gekrümmten Abschnitt (14), dessen Krümmungshohlraum in Bezug auf den des zweiten Abschnitts (12) umgekehrt ist, eine zweite, profilierte Hauptwand, die einen ersten Abschnitt (16; 106, 206) darbietet, der im wesentlichen parallel zur Achse der Düse verläuft und die genannte Brennkammer (20) abgrenzt, einen zweiten Abschnitt (17), der in Bezug auf den ersten Abschnitt, an den er angesetzt ist, geneigt ist und den genannten Düsenhals (21) abgrenzt, einen dritten, im wesentlichen geradlinigen Abschnitt (18) und eine Endkante (19), die einen Ausbrennraum für die Düse abgrenzt, sowie eine erste und zweite Seitenwand (31, 32), die im wesentlichen eben sind und die erste und zweite profilierte Hauptwand verbinden, wobei die Düse außerdem Mittel aufweist, um wahlweise im Flug die Lage der Endkante anzupassen, die den Ausbrennraum (19) der Düse bildet, sowie die Lage des Halses (21),
**dadurch gekennzeichnet, daß** die genannte zweite, profilierte Hauptwand mindestens zwei gelenkig gelagerte, steife Platten (101, 102; 201, 202, 205) aufweist, die an einem ortsfesten Abschnitt (106; 206) des Düsenaufbaus angesetzt sind, und daß die Düse Betätigungsmittel auf der genannten zweiten, profilierten Hauptwand aufweist, um wahlweise im Flug unabhängig die Lage des Halses (21) und die der Endkante anzupassen, die den Ausbrennraum (19) der Düse bildet.

2. Zweidimensionale Düse nach Anspruch 1, dadurch gekennzeichnet, daß die zweite, profilierte Hauptwand mindestens eine erste Platte (102) aufweist, die auf dem ortsfesten Abschnitt (106) des Düsenaufbaus gleitet, und eine zweite Platte (101), die am stromabwärts gelegenen Ende der ersten Platte (102) angelenkt ist.

3. Zweidimensionale Düse nach Anspruch 2, dadurch gekennzeichnet, daß die erste Platte ihrerseits in eine erste und zweite Elementarplatte (105, 102) unterteilt ist, die gelenkig miteinander verbunden sind, wobei lediglich die erste Elementarplatte (105), die stromaufwärts angeordnet ist, auf dem genannten ortsfesten Abschnitt (106) gleitet.

4. Zweidimensionale Düse nach Anspruch 1, dadurch gekennzeichnet, daß die genannte zweite, profilierte Hauptwand mindestens eine erste Platte (205) aufweist, die an ihrem stromaufwärts gelegenen Ende auf dem ortsfesten Abschnitt (106) des Düsenaufbaus angelenkt ist, eine zweite Platte (202), die mit ihrem stromaufwärts gelegenen Ende am stromabwärts gelegenen Ende der ersten Platte (205) angelenkt ist, und eine dritte Platte (201), die am stromabwärts gelegenen Ende der zweiten Wand (202) angebracht ist und in Bezug auf diese zweite Wand (202) gleiten kann.

5. Zweidimensionale Düse nach irgendeinem der Ansprüche 1 bis 4, dadurch gekennzeichnet, daß sie bewegliche Zwischenwände (111, 121; 211, 221) aufweist, die zur genannten ersten und zweiten Seitenwand (31, 32) parallel sind und mit den genannten gelenkig gelagerten, steifen Platten (101, 102; 201, 202, 205) fest verbunden sind.

6. Zweidimensionale Düse nach Anspruch 5, dadurch gekennzeichnet, daß die beweglichen Zwischenwände (111, 121; 211, 221) zusammen mit den gelenkig gelagerten, steifen Platten (101, 102; 201, 202, 205) U-förmige Baukörper bilden.

7. Zweidimensionale Düse nach Anspruch 5 oder Anspruch 6, dadurch gekennzeichnet, daß die gelenkig gelagerten, steifen Wände (101, 102; 201, 202, 205) Bewehrungen (1110, 1210) tragen, die parallel zu der genannten ersten und zweiten Seitenwand (31, 32) verlaufen, und daß Zwischenwände mit kleinen Abmessungen (1111, 1211) an den genannten Bewehrungen (1110, 1210) angesetzt sind.

8. Zweidimensionale Düse nach irgendeinem der Ansprüche 5 bis 7, dadurch gekennzeichnet, daß die genannten, beweglichen Zwischenwände (111, 121; 211, 221) derart angebracht sind, daß sie sich teilweise überdecken können.

9. Zweidimensionale Düse nach irgendeinem der Ansprüche 5 bis 8, dadurch gekennzeichnet, daß sie mehrere parallele Adern (161, 162, 163) zum Umlauf von Verbrennungsgas aufweist, die durch die genannten, beweglichen Zwischenwände (111, 121; 211, 221) parallel zur ersten und zweiten Seitenwand (31, 32) abgegrenzt und fest mit den gelenkig gelagerten, steifen Platten (101, 102; 201, 202, 205) verbunden sind.

10. Zweidimensionale Düse nach irgendeinem der Ansprüche 1 bis 9, dadurch gekennzeichnet, daß sie Betätigungseinrichtungen (114, 115; 614, 615) aufweist, die im Raumfahrzeug über der Düse angeordnet sind, um die Versetzungsbewegungen der gelenkig gelagerten, steifen Platten (101, 102; 201, 202, 205) anzusteuern.

11. Zweidimensionale Düse nach irgendeinem der Ansprüche 5 bis 9, dadurch gekennzeichnet, daß sie Betätigungseinrichtungen (314, 315, 316; 414, 415) aufweist, die in den freien Räumen angeordnet sind, die zwischen den genannten, beweglichen Zwischenwänden (111; 211, 221) ausgespart sind, um die Versetzungsbewegungen der gelenkig gelagerten, steifen Platten (101, 102; 201, 202, 205) anzusteuern.

12. Zweidimensionale Düse nach irgendeinem der Ansprüche 5 bis 9 sowie Anspruch 10 oder Anspruch 11, dadurch gekennzeichnet, daß die Betätigungseinrichtungen (114, 115; 414, 415; 614, 615) ihre Wirkung auf die beweglichen Zwischenwände (111, 121; 211, 221) oder die Bewehrungen (1110, 1210) ausüben, die fest mit den gelenkig gelagerten, steifen Platten (101, 102; 201, 202, 205) verbunden sind.

13. Zweidimensionale Düse nach irgendeinem der Ansprüche 1 bis 9, dadurch gekennzeichnet, daß sie Betätigungseinrichtungen (514, 515, 516) aufweist, die auf einem ortsfesten Aufbau (40) angeordnet sind, der fest mit dem Raumfahrzeug verbunden ist und unter den genannten gelenkig gelagerten, steifen Platten (101, 102; 201, 202, 205) angeordnet ist.

14. Zweidimensionale Düse nach Anspruch 13, dadurch gekennzeichnet, daß sie Klappen (160, 170) aufweist, die auf den gelenkig gelagerten, steifen Platten (101, 102; 202, 202, 205) über den Gelenkverbindungen (103, 104; 203, 204) angeordnet sind, um einen kontinuierlichen Übergang der genannten zweiten, profilierten Hauptwand sicherzustellen.

15. Zweidimensionale Düse nach Anspruch 14, dadurch gekennzeichnet, daß die genannten Klappen (160; 170) auf einer stromaufwärts gelegenen Platte (102; 106) angelenkt sind und auf der unmittelbar benachbarten, stromabwärts gelegenen Platte (101; 102) durch den Druck der Brennkammer (20) und der Sicherheits-Rückstellfeder (164) angedrückt sind.

16. Zweidimensionale Düse nach irgendeinem der Ansprüche 10 bis 15, dadurch gekennzeichnet, daß die Betätigungseinrichtungen (114, 115; 314, 315, 316; 414, 415; 514, 515, 516; 614, 615) von hydraulischen Zylindern bzw. Stelleinrichtungen gebildet sind.

17. Zweidimensionale Düse nach Anspruch 7, dadurch gekennzeichnet, daß sie Führungsmittel (122) für die genannten Bewehrungen (1110, 1210) auf der genannten ersten, profilierten Hauptwand (11 bis 14) aufweist.

## Claims

1. Bidimensional expansion/deflection nozzle (10) adaptable to different flight conditions of an aerospace vehicle and comprising a first main profiled wall having a first part (11) approximately parallel to the longitudinal axis of the nozzle and delimiting a combustion chamber (20), a curved second part (12) delimiting a nozzle throat (21), a third part (13) which is essentially straight and inclined by a predetermined angle θ with respect to the axis of the nozzle, and a curved fourth part (14) which is curved in the opposite direction to the second part (12), a second main profiled wall having a first part (16; 106, 206) which is approximately parallel to the axis of the nozzle and delimiting the said combustion chamber (20), a second part (17) which is inclined with respect to the first part to which it is attached and delimiting the said nozzle throat (21), a third part (18) which is essentially straight and an end edge (19) defining a centre of pressure for the nozzle, and first and second lateral walls (31, 32) which are approximately flat connecting the first and second main profiled walls together, the nozzle further comprising means for selectively and during flight altering the position of the end edge which constitutes the centre of pressure (19) of the nozzle, and the position of the throat (21), characterized in that the said second main profiled wall comprises at least two rigid articulated panels (101, 102; 201, 202, 205) which are attached to a stationary part (106; 206) of the structure of the nozzle and in that the nozzle comprises means of acting on the said second main profiled wall in order selectively and during flight and independently to alter the position of the throat (21) and the position of the end edge which constitutes the centre of pressure (19) of the nozzle.

2. Bidimensional nozzle according to Claim 1, characterized in that the said second main profiled wall comprises at least a first panel (102) sliding on the stationary part (106) of the structure of the nozzle and a second panel (101) articulated to the downstream end of the first panel (102).

3. Bidimensional nozzle according to Claim 2, characterized in that the said first panel is itself subdivided into first and second elemental panels (105, 102) which are articulated together, only the first elemental panel (105) which is arranged upstream sliding on the said stationary part (106).

4. Bidimensional nozzle according to Claim 1, characterized in that the said second main profiled wall comprises at least a first panel (205) articulated at its upstream end to the stationary part (106) of the structure of the nozzle, a second panel (202) articulated by its upstream end to the downstream end of the first panel (205) and a third panel (201) mounted at the downstream end of the second panel (202) and capable of sliding with respect to this second panel (202).

5. Bidimensional nozzle according to any one of Claims 1 to 4, characterized in that it comprises moving partitions (111, 121; 211, 221) which are parallel to the said first and second lateral walls (31, 32) and secured to the said rigid articulated panels (101, 102; 201, 202, 205).

6. Bidimensional nozzle according to Claim 5, characterized in that the moving partitions (111, 121; 211, 221) form, together with the rigid articulated panels (101, 102; 201, 202, 205), U-shaped structures.

7. Bidimensional nozzle according to Claim 5 or Claim 6, characterized in that the rigid articulated panels (101, 102; 201, 202, 205) have frameworks (1110, 1210) parallel to the said first and second lateral walls (31, 32) and in that small-sized partitions (1111, 1211) are attached to the said frameworks (1110, 1210).

8. Bidimensional nozzle according to any one of Claims 5 to 7, characterized in that the said moving partitions (111, 121; 211, 221) are mounted in such a way that they can partially overlap.

9. Bidimensional nozzle according to any one of Claims 5 to 8, characterized in that it comprises several parallel streams (161, 162, 163) for the flow of combustion gases, these being delimited by the said moving partitions (111, 121; 211, 221) parallel to the first and second lateral walls (31, 32) and secured to the rigid articulated panels (101, 102; 201, 202, 205).

10. Bidimensional nozzle according to any one of Claims 1 to 9, characterized in that it comprises actuators (114, 115; 614, 615) arranged in the aerospace vehicle above the nozzle so as to control the movements for shifting the rigid articulated panels (101, 102; 201, 202, 205).

11. Bidimensional nozzle according to any one of Claims 5 to 9, characterized in that it comprises actuators (314, 315, 316; 414, 415) arranged in empty spaces left between the said moving partitions (111; 211, 221) for controlling the movements for shifting the rigid articulated panels (101, 102; 201, 202, 205).

12. Bidimensional nozzle according to any one of Claims 5 to 9 and Claim 10 or Claim 11, characterized in that the actuators (114, 115; 414, 415; 614, 615) exert their action on the moving partitions (111, 121; 211, 221) or the frameworks (1110, 1210) secured to the rigid articulated panels (101, 102; 201, 202, 205).

13. Bidimensional nozzle according to any one of Claims 1 to 9, characterized in that it comprises actuators (514, 515, 516) arranged on a stationary structure (40) secured to the aerospace vehicle and placed under the said rigid articulated panels (101, 102; 201, 202, 205).

14. Bidimensional nozzle according to Claim 13, characterized in that it comprises flaps (160, 170) arranged on the rigid articulated panels (101, 102; 201, 202, 205) above the articulations (103, 104; 203, 204) to ensure continuity of the said second main profiled wall.

15. Bidimensional nozzle according to Claim 14, characterized in that the said flaps (160; 170) are articulated to an upstream panel (102; 106) and pressed against the immediately adjacent downstream panel (101; 102) by the pressure from the combustion chamber (20) and from the safety return spring (164).

16. Bidimensional nozzle according to any one of Claims 10 to 15, characterized in that the actuators (114, 115; 314, 315, 316; 414, 415; 514, 515, 516; 614, 615) consist of hydraulic jacks.

17. Bidimensional nozzle according to Claim 7, characterized in that it comprises means (122) of guiding the said frameworks (1110, 1210) on the said first main profiled wall (11 to 14).
